# EUROPEAN PATENT APPLICATION

(11) **EP 3 007 111 A1**
(43) Date of publication of application: **13.04.2016**
(21) Application number: 14188417.1
(22) Date of filing: 10.10.2014
(51) Int. Cl.: G06N 3/12

(54) **Optimization method for a computer system**

(71) Applicant: Timing-Architects Embadded Systems GmbH, 93055 Regensburg (DE)
(72) Inventor: Deubzer, Michael, 93047 Regensburg (DE); Schmidhuber, Stefan, 84561 Mehring (DE)
(74) Representative: Meister, Matthias

(57) **Abstract**

A method for the optimization of the design and / or operation of a computer system is disclosed. According to the invention the method constructs an initial set (40) of solutions as input to an iterative optimization procedure by evaluating a preliminary set (13) of solutions according to at least one selection criterion (14). From this evaluation, a first subset (17), which contains solutions which satisfy the at least one selection criterion (14) to a degree better than a predefined first threshold (23, 25), results. The method then identifies common features of the solutions in the first subset (17). From these common features deployment rules (19) are derived, which constrain the solutions selected for the initial set (40), and which optionally also constrain the modifications of solutions during the iterative procedure. The deployment rules (19) may be updated during the iterative procedure.

## Description

The present invention relates to a method for optimizing the design and / or operation of a computer system. In particular the present invention relates to a method which achieves the desired optimization by an iterative procedure.

The international application PCT/EP2012/053242, published as WO 2012/146406 A1, discloses a method for the design evaluation of a system, in particular a computer system, and also a way to use the method for the optimization of a system. The method defines optimization targets, simulates the system, evaluates the simulation results, modifies the system in the simulation, and reiterates the simulation, until the optimization targets are achieved.

The published German patent application DE 10 2010 028 896 A1 relates to a method for assigning a plurality of tasks to a plurality of processing units. The problem of assignment is translated into a linear system of equations. A solution of this linear system corresponds to a specific assignment of tasks to processing units.

The German translation DE 695 28 776 T2 of European patent EP 0 870 247 B1 describes the use of genetic algorithms for the generation of a computer program.

The published German patent application DE 10 2006 010 400 A1 discloses the optimization of a system by optimizing a coordination of structural and functional elements of the system. The optimization can take into account predefined constraints between the elements of the system. The method starts by analyzing dependencies between the elements of the system.

The design of a computer system can be described by various parameters, like for example the number of processing units, clock cycle of processing units, memory, connectedness between units, for example which processing unit can access which memory unit, and within what time, and many more. In order to model even a moderately complex system sufficiently realistically for the model to be able to produce useful predictions, a vast number of parameters are required, resulting in a high dimensional parameter space or design space to be explored. This is aggravated, as apart from the design, also the operation of the computer system is to be taken into account, for example the assignment of specific tasks to be carried out to specific processing units. Even for a fixed design of the computer system, the number of possible assignments of tasks to processing units becomes combinatorially large with an increasing number of tasks. Fully exploring the entire parameter space, i.e. in the example above all possible assignments of tasks to processing units, and, as the case may be, also various designs of the computer system itself, is not feasible.

Some prior art methods take an iterative approach, starting from a number of initial solutions for the design and / or operation of the computer system and attempting to reach an optimal solution by repeated steps of modification of solutions and evaluation of the modified solutions. Keeping the best solutions, in the sense of the evaluation, and continuing the procedure with them, is a known approach, but, for high dimensional parameter spaces, an exploration of the relevant portions of the parameter space is still not efficient. Furthermore, it is often not known what the relevant portions of the parameter space are.

It therefore is the object of the invention to provide a method for finding an optimized solution for the design and / or operation of a computer system which is more efficient and reliable than the methods of prior art.

Computer system here can refer to a multi-core or multi-processor computer system, which can be an embedded or a non-embedded system; single-core or single-processor systems, embedded or non-embedded, are also within the scope of the method.

According to the invention, a preliminary set of solutions for the design and / or operation of a computer system is selected; this selection can, for example, be a random selection. In a model of the computer system, selecting a solution for the design and / or operation of the computer system means selecting values for a set of parameters which in the model describe the design of the computer system and / or its operation. This set of parameters can for example comprise information on the number of processing units, e.g. processor cores, in the computer system, the amount of storage accessible for each processing unit and the corresponding access times, the clock cycles of each processing unit, the allocation of tasks to processing units, and the priority of tasks. As further examples, the parameters can specify the mapping of application software functions to tasks, the order of application software function execution inside a task, the positioning of synchronization events between tasks, the branching and joining of tasks in the case of multi-threaded execution, the splitting of a task into a sequence of sub-tasks, the activation time for tasks, the mapping of variables or data to memory modules. A task here ultimately corresponds to a set of instructions to be carried out by at least one processing unit, and it is part of the model to set the granularity at which a task is represented. A task can also be characterized as comprising a number of application software functions, or runnables, executed in a graph-equal order (meaning branch-alternatives as well as sequential order). A runnable itself may contain further function calls or as basic elements instruction-accesses, data-accesses, as well as peripheral-accesses like timer units or I/O driver. Application software functions provide the functionality desired from an application software. For running the application software on a computer system, these application software functions are organized in tasks, i.e. mapped to tasks as mentioned above, the execution of which is under control of a scheduler of the computer system. In this context the activation time for tasks means the instants of time during the execution of the application software at which a respective task is activated. This can be dependent on specific events, like signals from external sensors, the availability of data provided by other tasks, or can follow a periodic pattern. In the latter case, if plural tasks are to be executed periodically, with equal periods or periods with a rational ratio between them, a parameter affecting the activation time is a time offset between the periodic executions of the plural tasks, so that load on the computer system is averaged rather than peaked.

Values for the parameters in the set of parameters are chosen, for example arbitrarily or at random, wherein, however, always constraints can be taken into consideration; for example, the access time of a processing unit to a unit of storage, like a block of RAM memory or a hard drive, may always be chosen from within a reasonable interval, i.e. not be shorter than the minimum time technically possible and not larger than a maximum time acceptable to a user of the modeled computer system. Constraints may in particular also fix particular parameters to specific values. For example, in specific cases the optimization of a computer system may be required in which the number of processor cores is fixed. In such a case, the parameter of the model giving the number of processor cores is a fixed parameter, i.e. its value will not change in the optimization method, while other parameters are variable, i.e. their values are allowed to change in the optimization method. Of course, in different examples, other parameters may be fixed instead of or in addition to the number of processor cores, e.g. the size of the main memory may be fixed.

The selected preliminary set of solutions is evaluated according to at least one selection criterion. Then a first subset of solutions is selected from the evaluated preliminary set of solutions. For this application, a first subset of a set of solutions considered is defined as a subset of the solutions considered comprising those of the solutions considered which satisfy at least one criterion to a degree better than a corresponding predefined first threshold; there may be such a predefined first threshold for each criterion applied. In the case of the preliminary set of solutions as the set of solutions considered, the at least one criterion is the at least one selection criterion. Therefore, in this case, the first subset is a subset the members of which satisfy the at least one selection criterion to a degree better than a corresponding predefined first threshold. If the at least one selection criterion for example is given by a function of values characterizing the solution, and the optimal solution corresponds to a maximum of the function, then all solutions for which the corresponding function yields a value above a predefined threshold value may be considered. Alternatively, all solutions may be considered the corresponding function values of which belong to a predefined percentage of highest function values. For example, the function is evaluated for all solutions considered, and those solutions are selected as the first subset, which are amongst the 10% or 20% of the solutions corresponding to the highest function values. Analogously, if the at least one selection criterion for example is given by a function of values characterizing the solution, and the optimal solution corresponds to a minimum of the function, then all solutions for which the corresponding function yields a value below a predefined threshold value may be considered. Alternatively, all solutions may be considered the corresponding function values of which belong to a predefined percentage of lowest function values. If more than one selection criterion is employed, then all solutions may be considered members of the first subset of solutions which satisfy a predefined number of the selection criteria employed, for example, one, two, three, or more, or all, to a degree better than a respective predefined first threshold, as specified above; i.e. one predefined first threshold per selection criterion is used. The at least one selection criterion and the respective first threshold are specified when the method is set up.

The solutions in the first subset are then analyzed in order to identify at least one feature common to these solutions. Two solutions are considered to have a common feature, if a parameter, which in the model can differ between solutions, i.e. a variable parameter of the model, has the same value for both solutions or if the two solutions have values for the specific parameter which are sufficiently similar, for example if the parameter values are within a predefined percentage of one of the parameter values from each other or within an predefined absolute maximum distance from each other. If all solutions in the first subset exhibit the same value for a specific variable parameter, or sufficiently similar values as just defined, that value of the parameter is considered a common feature of the solutions of the first subset. As a less restrictive alternative, a specific value of a parameter may be taken a common feature of the solutions of the first subset, if at least a predefined percentage, for example at least 70%, of the solutions of the first subset exhibit this specific value for the parameter or a sufficiently similar value, in the above sense, for the parameter. The less restrictive alternative avoids the problem of a potentially important feature being missed because a small number of solutions in the first subset, in an extreme case a single solution in the first subset, do not exhibit the feature, i.e. do have values for the specific parameter which are not sufficiently similar to the values exhibited by a majority of solutions in the first subset. The analysis preferentially will aim to identify all common features of solutions in the first subset.

Next, a set of deployment rules is derived from the at least one common feature identified. Deployment rules are rules that specify which solutions out of all possible solutions will be considered in the following steps of the method. For example, the deployment rules can specify that only solutions will be considered further which exhibit all the features identified as common features of the first subset analyzed. Less restrictively, a solution will be considered if it exhibits a predefined fraction or even only at least one of the features identified as common features of the first subset analyzed. Next, according to the deployment rules derived, an initial set of solutions is chosen. The initial set of solutions may be chosen out of the preliminary set of solutions, or may be selected from all solutions admissible under the deployment rules. In the latter case, the selection may be random. If the initial set of solutions is chosen from the preliminary set of solutions, then all members of the preliminary set which are admissible under the deployment rules may be members of the initial set of solutions.

This initial set of solutions is provided as input to an iterative procedure. This iterative procedure evaluates the solutions according to the at least one optimization criterion, modifies the solutions, evaluates the modified solutions, accepts, depending on the procedure perhaps only with a certain probability, a modified solution if the modified solution is better according to the at least one optimization criterion than the solution prior to modification, and reiterates the modification and evaluation steps until the at least one optimization criterion is met. Examples of such an iterative procedure are a genetic algorithm, an evolutionary algorithm, a Metropolis algorithm. The way solutions are modified depends on the algorithm chosen, and forms part of the known definition of the specific algorithm.

If the at least one optimization criterion comprises a function of values characterizing the solutions, and an optimal solution corresponds to a minimum of this function, then the optimization criterion is for example met, if for a specific solution the value of the function is below a terminal threshold. Analogously, if the optimal solution corresponds to a maximum of this function, then the optimization criterion is for example met, if for a specific solution the value of the function is above a terminal threshold. The terminal threshold, and more generally the at least one optimization criterion, are specified when the method is set up. This is for example done by user input when providing the model description of the computer system. If more than one optimization criterion is used, then a terminal threshold may be provided for each optimization criterion. However, more complex conditions for ending the iterative procedure, i.e. for considering the at least one optimization criterion met, are also conceivable, as will be discussed further below.

The identification of common features of "good" solutions, i.e. of solutions within the first subset of solutions, which satisfy the at least one selection criterion to a degree better than a predefined first threshold, and the deployment rules derived therefrom imply constraints on the solutions considered and therefore a restriction of the parameter space to be explored. Therefore the method is more efficient than prior art. These restrictions of the parameter space are derived from an analysis of a set of preliminary solutions, evaluated according to the at least one selection criterion; the restrictions are not imposed arbitrarily by a user. Therefore, the method is more reliable than prior art, and less likely to ignore regions of parameter space which might accidentally be ignored if restrictions of the parameter space are imposed externally, for example by a user.

In an advantageous embodiment of the invention, the deployment rules derived are not only applied when selecting the initial set of solutions for the iterative procedure, but also during the iterative procedure, when solutions are modified. Only those modifications of solutions will be made which result in modified solutions admissible under the deployment rules.

In an embodiment, a second subset of solutions is selected from the preliminary set of solutions. For this application, a second subset of a set of solutions considered is defined as a subset of the solutions considered comprising those of the solutions considered which satisfy at least one criterion to a degree worse than a corresponding predefined second threshold; there may be such a predefined second threshold for each criterion applied. In the case of the preliminary set of solutions as the set of solutions considered, the at least one criterion is the at least one selection criterion. Therefore in this case the second subset is a subset the members of which satisfy the at least one selection criterion to a degree worse than a corresponding predefined second threshold. If the at least one selection criterion for example is given by a function of values characterizing the solution, and the optimal solution corresponds to a maximum of the function, then all solutions for which the corresponding function yields a value below a predefined threshold value may be considered as members of the second subset. Alternatively, all solutions may be considered the corresponding function values of which belong to a predefined percentage of lowest function values. Analogously, if the at least one selection criterion for example is given by a function of values characterizing the solution, and the optimal solution corresponds to a minimum of the function, then all solutions for which the corresponding function yields a value above a predefined threshold value may be taken as members of the second subset. Alternatively, all solutions may be considered members of the second subset the corresponding function values of which belong to a predefined percentage of highest function values. If more than one selection criterion is employed, then all solutions may be considered members of the second subset of solutions, which satisfy a predefined number of selection criteria, for example, one, two, three, or more, or all, to a degree worse than a respective predefined second threshold, as specified above.

The second subset of solutions is then analyzed to identify common features of solutions in the second subset of solutions, where common features are defined as in the case of the first subset.

The deployment rules are then augmented by deployment rules derived from the identified common features of the second subset of solutions. The deployment rules derived from the second subset of solutions may in particular stipulate to exclude solutions exhibiting all the common features identified for the second subset, or a defined fraction of the common features identified for the second subset, from further consideration. Solutions exhibiting all or a defined fraction of these identified common features will not be admitted as members of the initial set of solutions for the iterative procedure. In embodiments, solutions exhibiting all or a defined fraction of the identified common features of the second subset will not be taken into consideration as modified solutions during the iterative procedure.

In a further embodiment, the deployment rules, originally derived from common features of the first subset of the preliminary set of solutions, and in some embodiments also from common features of a second subset of the preliminary set of solutions, are updated corresponding to intermediate results of the iterative procedure. From the set of solutions existing at a certain stage during the iterative procedure a first subset is chosen, as specified above, where now the at least one criterion for definition of the first subset is the at least one optimization criterion, and at least one predefined first threshold corresponding to the at least one optimization criterion is used. Then, in analogy to what has been said above, at least one common feature of this first subset of the solutions is identified. Deployment rules are then derived from the newly identified at least one common feature. The deployment rules derived at this stage may be applied in addition to the previously derived deployment rules or may replace them. The replacement of a deployment rule includes the case of modification of a deployment rule. If, for instance, a deployment rule specifies that only solutions are to be considered further for which a specific parameter has a value within a particular range, then a change of this range can be considered a modification or a replacement of the deployment rule.

In embodiments, additionally or as an alternative to a first subset of solutions existing at a certain stage during the iterative procedure a second subset of solutions existing at a certain stage during the iterative procedure is chosen, as specified above, where now the at least one criterion for definition of the second subset is the at least one optimization criterion, and at least one predefined second threshold corresponding to the at least one optimization criterion is used. Then, in analogy to what has been said above, at least one common feature, as defined above, of this second subset of solutions is identified. Deployment rules are then derived from the newly identified at least one common feature. The deployment rules derived at this stage may be applied in addition to the previously derived deployment rules or may replace them. Solutions exhibiting all or a defined fraction of the identified common features derived from the second subset of solutions will not be considered further in the iterative procedure, unless at a later stage the deployment rules are modified such that the respective features are no longer inadmissible under the deployment rules.

In an embodiment, evaluating a solution according to the at least one selection or the at least one optimization criterion involves determining the value of at least one metric for the solution. A metric here is a quantity which expresses information on the performance of the computer system. A metric can for example be the size of a specific buffer memory required, the maximum time for execution of a specific task, the maximum reaction time of a given task, the idle time of a processing unit. The value of each metric used is determined for the specific solution evaluated.

The at least one optimization criterion can include a value of a specific metric above or below a particular terminal threshold, i.e. the optimization of the computer system aims at finding a solution for which this specific metric exhibits a value above or below, as the case may be, the particular terminal threshold. The terminal threshold may for example be predefined by a user, for example fixed by technical requirements for the computer system like a reaction time for a specific task below a particular value.

Usually, a plurality of metrics is employed in evaluating a solution. In such embodiments, advantageously a fitness function is calculated from the plurality of metrics. The optimization of the system then aims to achieve a value of the fitness function above or below a predefined terminal threshold, depending on whether an optimal solution corresponds to a maximum or minimum of the fitness function. The fitness function may for example be a weighted average of the metrics or the squares of the metrics considered. The weights can for example be assigned to the metrics beforehand by a user, depending on what characteristics of the performance of the system, i.e. what metrics, are of particular importance for a given optimization task.

When considering a plurality of metrics, the situation may arise that a set of solutions exists which are optimal in the sense that starting from one such solution one metric may be improved by a modification of the solution, but only at the expense of worse results for a different metric. Instead of considering all the metrics separately, a plurality of fitness functions may be calculated from subsets of the metrics considered, and the optimization may aim to achieve optimal results for all the fitness functions. Here it may be that a metric is used in the calculation of at most one fitness function or that a metric may be used in the calculation of more than one fitness function. In either case, some metrics may still be used themselves alongside the fitness functions. These approaches have in common that more than one criterion for an optimal solution exists, and the problem thus is a problem of multi-objective optimization, also known as Pareto-optimization. As one of many conceivable examples, it may be possible to reduce the execution time of a particular task (usually desirable), but only if more memory is used during the execution of the task (often a disadvantage). What is an optimal solution for the design and / or operation of the computer system cannot always be decided unambiguously in such a case, as the answer to the question may depend on the preferences of a user of the computer system or on circumstances arising in a specific situation at a given instance of time. Therefore multi-objective optimization aims at finding a Pareto-optimal set of solutions such that, as mentioned above, improving one metric or fitness function is not possible without worsening at least one different metric or fitness function. The iterative procedure in such a case terminates, when such a set has been established, or approximated to a degree sufficient for the specific optimization problem.

The at least one metric in embodiments is obtained from a simulation of the system. For the simulation, the computer system to be simulated is described by a set of parameters which are input to a simulator, usually comprising at least one computer. The simulator carries out a simulation of the system and can output values for the metric directly from the simulation. A method for simulation of a computer system is for example described in the publication WO 2012/146406 A1.

Alternatively, values for the at least one metric may also be obtained from measurements on a computer system existing as hardware. Changes to the hardware may be made to implement changes of the design of the computer system, and settings in an operating system may be modified to change the operation of a computer system, for example the assignment of tasks to processing units or the priority of tasks. Parameters describing solutions here are prescriptions for the hardware layout and the settings of the operating system, rather than input to a simulator dealing with a model of the computer system.

The method according to the invention considers at least one selection criterion, with corresponding predefined first threshold, for defining the first subset of the preliminary set of solutions, and in embodiments also a corresponding predefined second threshold, for defining the second subset of the preliminary set of solutions. The method according to the invention also considers at least one optimization criterion and in embodiments corresponding predefined first and / or second thresholds for defining a first and / or second subset of a set of solutions considered at a stage during the iterative procedure.

In embodiments, the at least one optimization criterion includes the at least one selection criterion. In specific embodiments, the optimization criterion is the same as the selection criterion. For example, both the selection criterion and the optimization criterion may involve evaluation of one and the same fitness function of a number of metrics. In some embodiments, the optimization criterion may include additional fitness functions that are not included in the selection criterion. In other embodiments, the optimization criterion does not involve additional fitness functions, or other requirements, and both for the selection criterion and the optimization criterion the same fitness function, only, is evaluated. In this case, there are two thresholds involved for this fitness function, the terminal threshold in the context of the optimization criterion and one or more predefined first thresholds, to be used in the context of the selection criterion when establishing the first subset of the preliminary set of solutions and, as the case may be, also in the context of the optimization criterion when establishing a first subset of solutions considered during the iterative method. Here, the terminal threshold will normally be such that it is not attained by all solutions in the first subsets of solutions considered, and often, no solution in the first subsets will attain the terminal threshold, as such a solution would already correspond to an optimal solution which normally remains to be found during the iterative procedure. Put differently, if an optimal solution corresponds to a maximum of the fitness function, then the terminal threshold will be higher than the predefined first threshold; the predefined second threshold will be lower than the predefined first threshold. If an optimal solution corresponds to a minimum of the fitness function, then the terminal threshold will be lower than the predefined first threshold; the predefined second threshold will be higher than the predefined first threshold.

It should furthermore be noted that predefined first threshold and predefined second threshold for the optimization criterion may be adapted during the course of the iterative procedure.

When building the initial set of solutions for the iterative procedure, fewer metrics or criteria may be considered among the at least one selection criterion than for the optimization criterion during the iterative procedure. For example, in a multi-core computer system, the optimization may aim to achieve both an as even as possible distribution of load between the cores and as short as possible reaction times. In this case, in some embodiments, the selection criterion may only be based on the even distribution of load, establishing a corresponding first subset of solutions and corresponding common features of the solutions in the first subset, which, according to the method, are considered to promote an even distribution of load between the cores. Achieving of short reaction times in this case is left entirely to the iterative procedure.

As another example, the selection criterion may stipulate that for solutions to be included into the first subset none of the tasks to be executed takes longer than a predefined first threshold. The optimization criterion then, in addition, may require that specific tasks, for example those for which short execution time is a particularly important feature, have execution times below a terminal threshold which corresponds to a shorter execution time than the predefined first threshold.

In what follows, the invention and its advantages shall be described in further detail with reference to specific embodiments and the accompanying figures.
- Fig. 1: shows a flow chart for an embodiment of a method to select, according to the invention, an initial set of solutions.
- Fig. 2: shows a method for iterative improvement.
- Fig. 3: shows a method for iterative improvement, in which deployment rules derived according to the invention are used during the iterative improvement.
- Fig. 4: shows a method for iterative improvement, in which deployment rules derived according to the invention are used during the iterative improvement, and in which the deployment rules are updated during the iterative improvement.
- Fig. 5: schematically illustrates the invention in the context of multi-objective optimization.

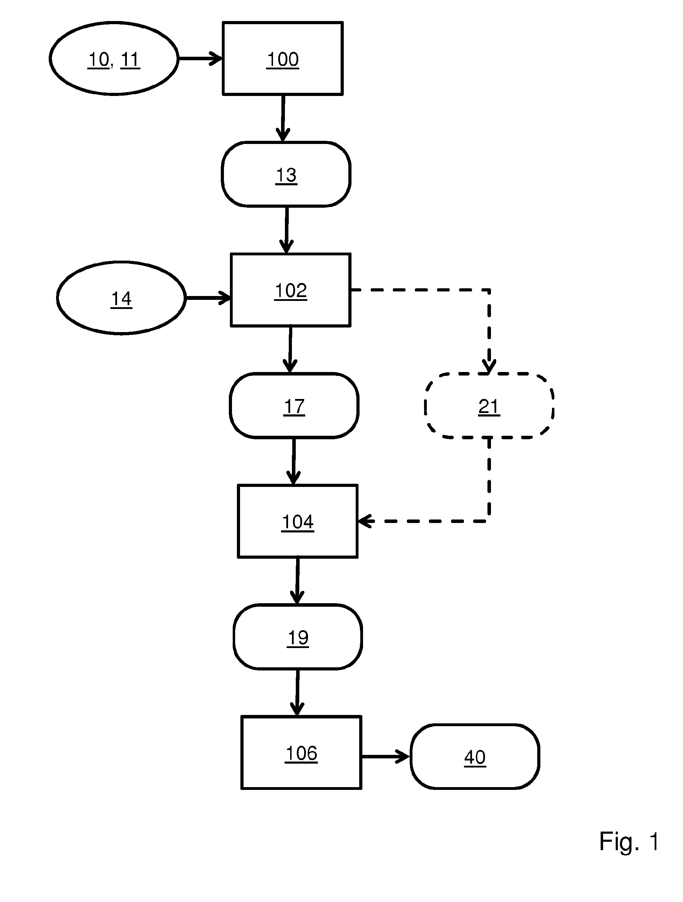

**Fig. 1** shows a flow chart for an embodiment of a method to select an initial set of solutions, which forms part of the method according to the invention. In step 100, a description of the computer system in terms of parameters is provided. The parameters comprise fixed parameters 10 and variable parameters 11. Fixed parameters 10 are not changed in the method and describe features of the computer system which are fixed. For example, a user may be interested in optimizing the design and / or operation of a computer system, where this computer system is restricted to have four processing cores of fixed type. Then the number of processing cores and any parameters describing properties of these processing cores would be fixed, while for example the allocation of tasks to the processing cores, access schemes to cache memory and main memory, the size of the main memory, and task priority would be considered variable parameters, i.e. parameters that can be changed during the optimization method in order to arrive at an optimized solution for the design / and or operation of a computer system. Each choice of values for each parameter, out of a respective allowed range corresponding to each parameter, represents a solution for the design and / or operation of the computer system. The space of variable parameters 11 can be considered equivalent to the space of solutions. The method according to the invention aims at finding an optimized solution in this space. Several solutions are selected at random from the space of solutions, i.e. several sets of values are chosen for the variable parameters 11; the set of solutions selected in this way is the preliminary set 13 of solutions.

In step 102, the solutions in the preliminary set 13 are evaluated according to at least one selection criterion 14, which for example is user defined, and a first subset 17 of solutions is built based on the result of this evaluation. The first subset 17 comprises all those solutions evaluated in step 102 which satisfy the at least one selection criterion 14 to a degree better than a predefined first threshold. Such a first threshold may be provided alongside and adapted to the at least one selection criterion 14. Additionally, in an embodiment, from the evaluation of step 102 also a second subset 21 of solutions is derived. The second subset 21 comprises all those solutions evaluated in step 102 which satisfy the at least one selection criterion 14 to a degree worse than a predefined second threshold. Such a second threshold may be provided alongside and adapted to the at least one selection criterion 14.

In step 104, the first subset 17 is analyzed in order to identify common features of the solutions in the first subset 17. In embodiments where a second subset 21 is also derived, the second subset 21 is also analyzed in order to identify common features of the solutions in the second subset 21. What is to be considered a common feature has already been discussed above. From the analysis performed in step 104, deployment rules 19 result.

In step 106, an initial set 40 of solutions for an iterative optimization procedure is constructed based on the deployment rules.

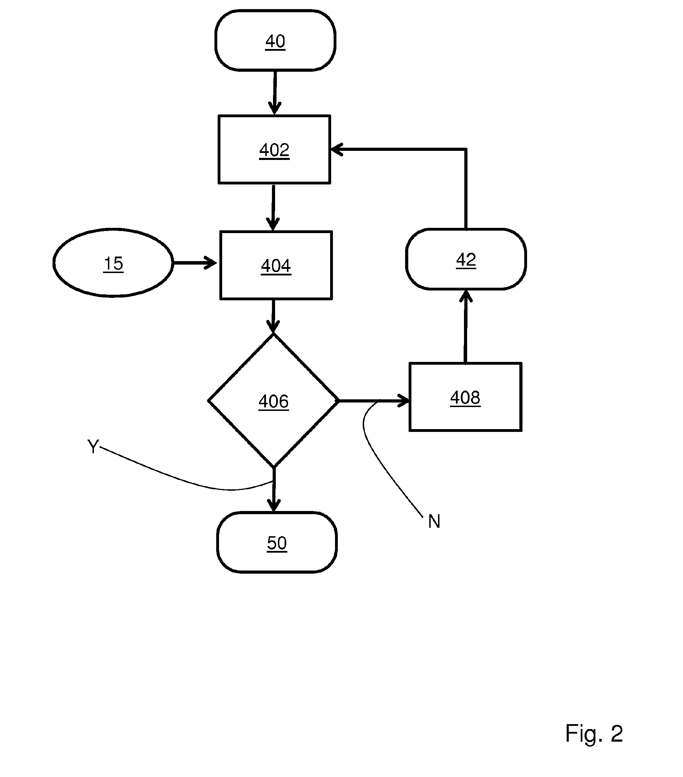

**Fig. 2** shows an embodiment of an iterative optimization method. An initial set 40 of solutions, derived for example according to the method discussed in the context of Fig. 1, is input into the method. In step 402, the solutions provided are analyzed in order to obtain information on the performance of the computer system represented by the respective solutions. This analysis may involve a simulation of the computer system and / or measurements on the computer system existing in hardware. The information obtained may be expressed as metrics discussed above; the values of such metrics may be produced during the execution of step 402. In step 404, for each solution currently considered in the iterative optimization the information obtained in step 402 is evaluated according to at least on optimization criterion 15; for example, a fitness function or a plurality of fitness functions may be calculated from metrics obtained in step 402. In step 406, for each solution currently considered in the optimization method, the result of the evaluation in step 404 is tested, whether it meets the at least one optimization criterion 15. For example, it may be tested whether the value of a particular fitness function, evaluated for a solution in step 404, is below a terminal threshold; here the fitness function and terminal threshold form part of the optimization criterion 15, and in this example an optimal solution corresponds to a minimum of the particular fitness function. If the at least one optimization criterion 15 is met, represented by arrow 'Y', the respective solution evaluated is considered an optimized solution 50. Otherwise, represented by arrow 'N', in step 408 the set of solutions considered is modified, and a resulting modified set 42 of solutions is input into step 402 for analysis. The process reiterates until at least one solution is found that meets the at least one optimization criterion 15. An additional termination criterion may be provided in terms of a maximum number of iterations, to prevent an infinite loop in case the at least one optimization criterion 15 cannot be satisfied based on the set of solutions and their potential modifications under consideration. In such a case restarting the entire process from a new initial set 40 of solutions and / or a less strict optimization criterion may be considered.

In the case of Pareto-optimization, a single, unambiguously optimal solution does not exist, and the method will aim at obtaining a set of solutions which approximate the Pareto-optimal set to a degree deemed sufficient by a user of the system.

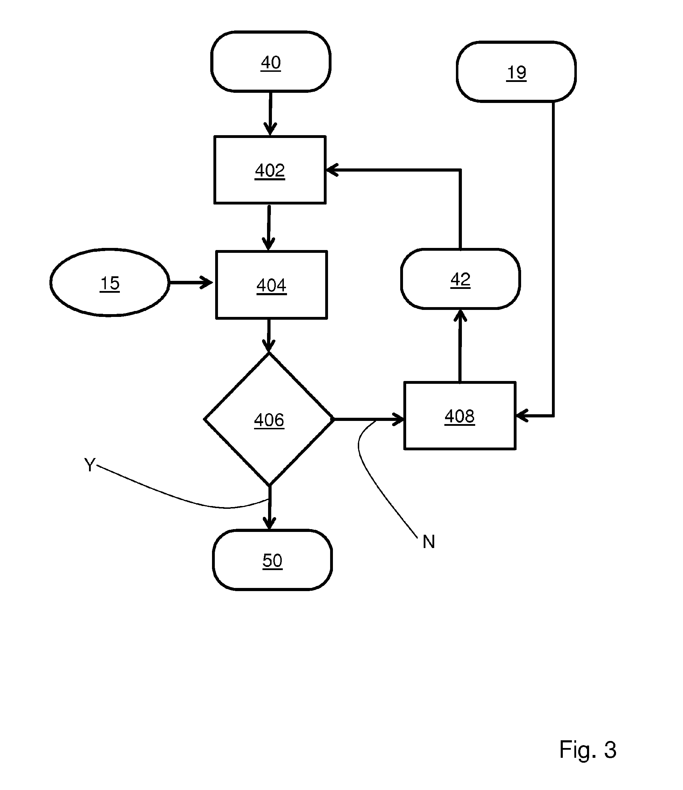

**Fig. 3** shows a method largely similar to the method shown in Fig. 2, most of the steps shown in Fig. 3 have already been discussed in the context of Fig. 2. Here, however, deployment rules 19 derived according to the invention, for example according to the method shown in Fig. 1, are taken into consideration when modifying solutions in step 408 during the iterative procedure shown in Fig. 3. Only those modifications of solutions are considered which produce modified solutions admissible under the deployment rules 19.

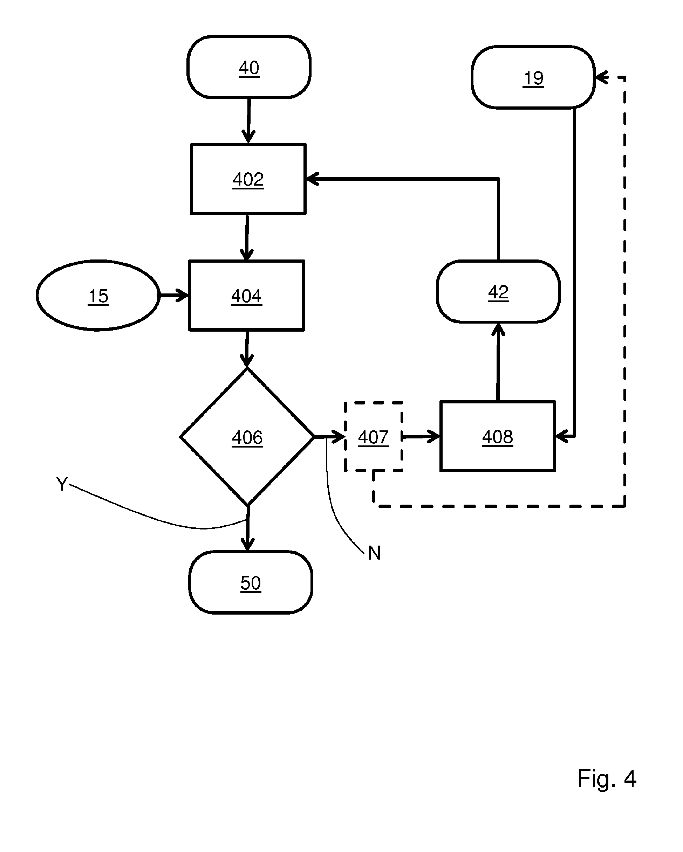

**Fig. 4** shows an embodiment of an iterative optimization method which is an extension of the method shown in Fig. 3. Here, in case an optimized solution 50, or a sufficient number of optimized solutions 50, has not been found yet, i.e. if arrow 'N' is followed from step 406, in a step 407 the evaluated solutions are analyzed in order to update the deployment rules 19. The deployment rules 19 are then used in modifying the set of solutions in step 408, as in the method of Fig. 3. The update 407 of the deployment rules 19 may for example be done at each iteration, or after a predefined number, greater than one, of iterations, or if certain conditions are met by the solutions evaluated.

The update of the deployment rules 19 may be done in analogy to establishing the deployment rules 19 prior to the iterative procedure, as described for example in Fig. 1, with the solutions currently considered in the iterative procedure taking the place of the solutions in the preliminary set 13 of solutions, and the at least one optimization criterion 15 taking the place of the at least one selection criterion 14. In this case, a first subset of the currently considered solutions is determined, the first subset having as members all those solutions currently considered which satisfy the at least one optimization criterion 15 to a degree better than a predefined first threshold. Common features of the solutions in the first subset are identified, and modifications of the deployment rules 19 are derived therefrom. Additionally, a second subset of the currently considered solutions may be identified, the second subset having as members all those solutions currently considered which satisfy the at least one optimization criterion 15 to a degree worse than a predefined second threshold. Common features of the solutions in the second subset are identified, and modifications of the deployment rules 19 are derived therefrom.

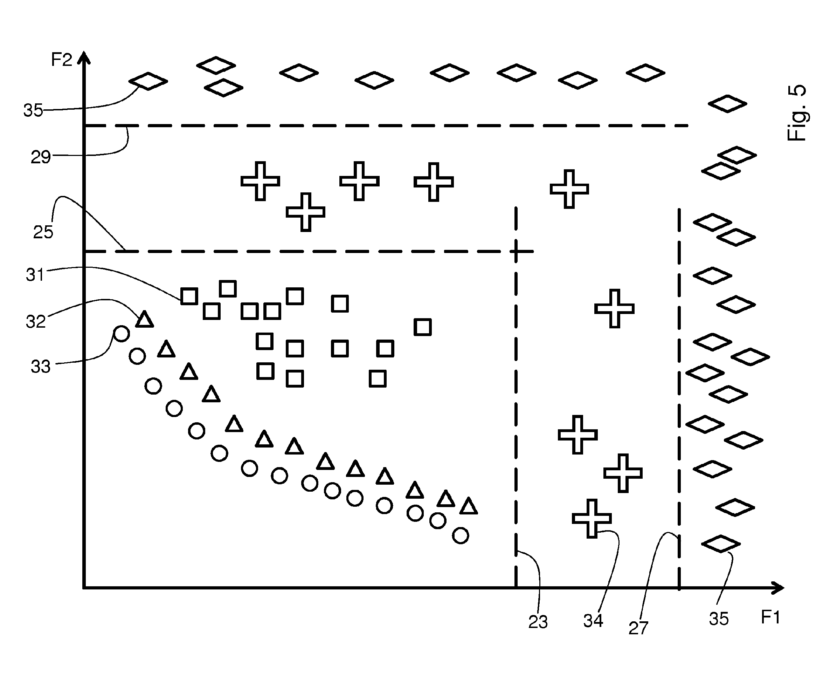

**Fig. 5** illustrates some concepts of the invention in the context of multi-objective optimization. For the purposes of illustration, only two optimization criteria, F1 and F2, are considered and shown with respective coordinate axes in the plane of the drawing. The optimization criteria F1 and F2 are taken to be such that, if each is considered by itself, a smaller value indicates a better solution. In the drawing, symbols 31, 32, 33, 34, and 35 represent solutions for the design and / or optimization of the computer system, the location of each symbol 31, 32, 33, 34, 35 indicating the values of the optimization criteria F1 and F2 for the respective solution.

In the example shown, the optimization criteria F1 and F2 are such that there is no unambiguous optimal solution. Instead, there exists an optimal subset of solutions, indicated by circles 33, which is such that a modification of a solution of this optimal subset, which leads to an improvement, i.e. a lower value, of criterion F1 necessarily yields a higher value for F2, i.e. a worsening with respect to F2, and vice versa. The optimization method aims at finding this optimal subset. If the parameters which specify the solutions are only varied in discrete steps, so that the parameter space is a multidimensional grid, then a discrete optimal subset, constrained to the multidimensional grid, of this parameter space may in principle be established exactly. Often, however, an approximation of the optimal subset is sufficient. Solutions representing such an approximation to an optimal set are shown as triangles 32. Methods for finding the optimal set in specific cases and for establishing approximate optimal sets are known in the art.

Also shown are a predefined first threshold 23 for criterion F1, and a predefined first threshold 25 for criterion F2. As at the beginning of the optimization method there is in principle no knowledge on the optimal set of solutions, the establishment of the first subset of solutions 17 (see Fig. 1) in this example is based on separate predefined first thresholds 23, 25 for each optimization criterion F1 and F2. Of course, the predefined first threshold could instead also be a more complex curve in the F1-F2 plane (or surface, in higher dimensional cases), i.e. not parallel to the F1-axis or the F2-axis, and only solutions would form members of the first subset of solutions 17 which are below that curve. In the case of multi-objective optimization just as in the case of a single fitness function to be optimized it is of course possible to adapt the predefined first threshold during the execution of the iterative optimization.

Squares 31 represent solutions which are members of the first subset 17, for example the first subset 17 of the preliminary set 13 (see Fig. 1) of solutions, assuming that F1 and F2 are also used as selection criteria, or of a set of solutions considered at an intermediate stage of the iterative optimization procedure, because the solutions represented by squares 31 correspond to a value of optimization criterion F1 below first threshold 23 and to a value of optimization criterion F2 below first threshold 25. The same applies to the solutions represented by triangles 32 and circles 33. However, the solutions represented by the circles 33 are the optimal set of solutions to be found by the method, and are usually not known at the start of the method, and the solutions represented by triangles 32 are an approximation to the optimal set; such an approximate set will usually only be obtained after several iterations of the iterative optimization procedure, such as shown in Figs. 2, 3, and 4.

Also shown are a predefined second threshold 27 for optimization criterion F1 and a predefined second threshold 29 for optimization criterion F2. Solutions, represented by diamonds 35, which correspond to a value of at least one optimization criterion F1, F2 above the respective predefined second threshold 27, 29, in this embodiment, are taken as members of the second subset 21 (see Fig. 1) of solutions. Alternatively, only those solutions could be taken as members of the second subset 21 of solutions, for which the values of all optimization criteria F1, F2 are above the respective second thresholds 27, 29. Of course, the predefined second threshold could instead also be a more complex curve in the F1-F2 plane (or surface, in higher dimensional cases), i.e. not parallel to the F1-axis or the F2-axis, and only solutions would form members of the second subset 21 of solutions which are above that curve. In the case of multi-objective optimization just as in the case of a single fitness function to be optimized it is of course possible to adapt the predefined second threshold during the execution of the iterative optimization.

Solutions represented by crosses 34 neither are members of the second subset 21 of solutions, as both of their corresponding values for the optimization criteria F1, F2 are below the respective second thresholds 27, 29, nor of the first subset 17 of solutions, as this example considers members of the first subset 17 of solutions only those solutions for which the values of both optimization criteria F1, F2 are below the respective first threshold 23, 25, and for the solutions represented by crosses 34 at least one optimization criterion F1, F2 exhibits a value above the respective first threshold 23, 25.

## Claims

1. Method for finding an optimized solution for the design and / or operation of a computer system by an iterative procedure including the steps of providing an initial set (40) of solutions, modifying the solutions, evaluating the modified solutions according to at least one optimization criterion (15), and repeating the modifying and evaluating steps until the at least one optimization criterion (15) is met,
**characterized in that**
the initial set (40) of solutions is obtained by
a) selecting a preliminary set (13) of solutions and evaluating the selected preliminary set (13) of solutions according to at least one selection criterion (14);
b) analyzing a first subset (17) of solutions of the preliminary set (13) of solutions in order to identify at least one common feature of the solutions in the first subset (17) of solutions, wherein the first subset (17) of a set of solutions considered is defined as comprising those solutions of the set of solutions considered which satisfy at least one criterion to a degree better than a corresponding predefined first threshold (23, 25), and wherein for this step this at least one criterion is a predefined number of the at least one selection criterion (14);
c) deriving a set of deployment rules (19) from the identified at least one common feature; and
d) choosing the initial set (40) of solutions according to the deployment rules (19).

2. The method of claim 1, wherein the deployment rules (19) are also applied when modifying the solutions during the iterative procedure.

3. The method of claim 1 or 2, wherein additionally a second subset (21) of the preliminary set (13) of solutions is analyzed in order to identify at least one common feature of the solutions of the second subset (21), wherein the second subset (21) of a set of solutions considered is defined as comprising those solutions of the set of solutions considered which satisfy at least one criterion to a degree worse than a corresponding predefined second threshold (27, 29), and the deployment rules (19) are augmented based on the result of this analysis, wherein for the case of the second subset (21) of the preliminary set (13) of solutions this at least one criterion is a predefined number of the at least one selection criterion (14).

4. The method of one of the claims 1 to 3, wherein the deployment rules (19) are updated based on an analysis of solutions corresponding to intermediate results of the iterative procedure.

5. The method of claim 4, wherein the analysis includes analyzing a first subset and / or a second subset of the solutions corresponding to intermediate results of the iterative procedure, the criterion for the definition of the first subset and second subset, respectively, being the at least one optimization criterion.

6. The method of one of the claims 1 to 5, wherein the deployment rules (19) include a restriction of the solutions to be considered further in the method to solutions which exhibit at least a predefined number of features from amongst the identified at least one common feature of the solutions in a respective first subset (17) of solutions.

7. The method of claims 3 to 6, wherein the deployment rules (19) include an exclusion from further consideration in the method of solutions which exhibit at least a predefined number of features from amongst the identified at least one common feature of the solutions in a respective second subset (21) of solutions.

8. The method of one of the previous claims, wherein evaluating a solution involves determining the value of at least one metric for the solution, a metric being a quantity expressing information on the performance of the computer system.

9. The method of claim 8, wherein the at least one optimization criterion (15) includes a terminal threshold for a fitness function, a fitness function being a function calculated from the at least one metric.

10. The method of claim 8 or 9, wherein the at least one optimization criterion (15) includes a plurality of objectives for multi-objective optimization.

11. The method of one of the claims 8 to 10, wherein the at least one metric is obtained from a simulation of the computer system.

12. The method of one of the claims 8 to 10, wherein at least one of the at least one metric is obtained from a measurement performed on the computer system.

13. The method of one of the previous claims, wherein the at least one optimization criterion (15) includes the at least one selection criterion (14).

14. The method of claim 9, wherein the at least one optimization criterion (15) and the at least one selection criterion (14) utilize the same fitness function, and where the terminal threshold for the optimization criterion (15) corresponds to a solution which is better in the sense of the optimization criterion (15) than the predefined first threshold (23, 25) for the selection criterion (14).

## Amended claims

### Amended claims in accordance with Rule 137(2) EPC.

1. Method for finding an optimized solution (50) for the design and / or operation of a computer system by an iterative procedure including the steps of providing a model of the computer system by which the design and / or operation of the computer system is described in terms of parameters, a solution for the design and / or operation of the computer system corresponding to a selection of values for these parameters, providing an initial set (40) of solutions, modifying the solutions, evaluating the modified solutions according to at least one optimization criterion (15), and repeating the modifying and evaluating steps until the at least one optimization criterion (15) is met by at least one solution, this at least one solution then considered an optimized solution (50) for the design and / or operation of the computer system,
**characterized in that**
the initial set (40) of solutions is obtained by
a) selecting solutions for a preliminary set (13) of solutions, and evaluating the solutions in the selected preliminary set (13) of solutions according to at least one selection criterion (14);
b) analyzing the solutions in a first subset (17) of solutions of the preliminary set (13) of solutions in order to identify at least one common feature of the solutions in the first subset (17) of solutions, wherein the first subset (17) of a set of solutions considered is defined as comprising those solutions of the set of solutions considered which satisfy at least one criterion to a degree better than a corresponding predefined first threshold (23, 25), and wherein for this step this at least one criterion is a predefined number of the at least one selection criterion (14), and wherein a common feature of the first subset of solutions is defined as a value of a parameter in the model such that at least a predefined percentage of the solutions of the first subset exhibit this value of the parameter or a sufficiently similar value, two values being considered sufficiently similar if the respective values are within a predefined percentage of one of the parameter values from each other or within a predefined absolute maximum distance from each other;
c) deriving a set of deployment rules (19), deployment rules being rules specifying which solutions out of all possible solutions will be considered in the following steps of the method, from the identified at least one common feature, by specifying that a solution will be considered if it exhibits a predefined fraction of the features identified as common features of the first subset analyzed; and
d) choosing the initial set (40) of solutions according to the deployment rules (19).
